# EUROPEAN PATENT SPECIFICATION

(11) **EP 3 499 114 B1**
(45) Date of publication and mention of the grant of the patent: **15.07.2020**
(21) Application number: 17002031.7
(22) Date of filing: 14.12.2017
(51) Int. Cl.: F21S 41/20, F21S 41/32, F21S 43/31, F21S 43/20, F21V 5/00, F21V 7/00, F21V 7/06, F21S 41/143, F21S 43/247, F21S 43/241, F21S 43/243, G02B 19/00

(54) **VEHICLE LAMP LENS**
FAHRZEUGLAMPENLINSE
LENTILLE DE LAMPE DE VÉHICULE

(43) Date of publication of application: 19.06.2019
(73) Proprietor: T.Y.C. Brother Industrial Co., Ltd., 70248 Tainan City (TW)
(72) Inventor: Shih, Ming-Chih, 70248 Tainan City (TW)
(74) Representative: Zeitler Volpert Kandlbinder Patent- und Rechtsanwälte Partnerschaft mbB

(56) References cited:
- EP-A1- 1 005 619
- EP-A2- 2 811 218
- WO-A1-2016/009733
- JP-A- 2012 243 734
- US-A1- 2005 162 857
- US-A1- 2012 250 308

## Description

The disclosure relates to a lamp lens, and more particularly to a vehicle lamp lens which is disposed for transmitting a light that is emitted from a light emitting member.

A conventional vehicle lamp includes a light emitting member, and a vehicle lamp lens disposed to transmit light that is emitted from the light emitting member. The vehicle lamp lens has a light incident surface, a reflecting surface and a light output surface. With such disposition, the light that enters the conventional vehicle lamp lens will exit the conventional vehicle lamp lens through the light output surface after undergoing a total internal reflection (TIR) by the reflecting surface. In order to acquire a better light transmitting efficiency, it is necessary to improve the disposition of each of the surfaces of the conventional vehicle lamp lens.

US 2012/250308 A1 describes a reflective collimator assembly for guiding light from a light source. The apparatus has a light source for emitting light and a light guide for collimating the light. The light guide has a main reflective surface and a collimating reflective surface having a collimating focal point on the axis of the light guide. Therefore, the object of the disclosure is to provide a vehicle lamp lens that has an innovative structure, and that has good light transmitting efficiency.

According to the disclosure, the vehicle lamp lens is adapted to transmit light that is emitted from a light emitting member, and includes a base wall and a light output wall. The base wall has a light input surface adapted to face the light emitting member, and centered at an optical axis which is parallel to a front-rear direction, and a base surface centered at the optical axis, disposed in front of the light input surface for reflecting the light which is propagated from the light input surface, and having a plurality of parabolic base sections.

The light output wall extends forwardly from a front end of the base wall, cooperates with the base wall to define a lens space, and has an inner surface, an outer surface disposed opposite to the inner surface, and a light output surface connected between front ends of the inner and outer surfaces. The outer surface is formed with a plurality of microstructures disposed proximate to the base wall for reflecting the light, which is reflected from the base surface, toward the light output surface. Each of the microstructures has a parabolic first surface portion having a first virtual focus. The first virtual focuses of the first surface portions of the microstructures are located at the same point. Each of the base sections has a second virtual focus, said second virtual focuses being located at the same point, and being further away from said light input surface than the light emitting member. Said second virtual focuses of said base sections are not located on the optical axis.

Other features and advantages of the disclosure will become apparent in the following detailed description of the embodiment with reference to the accompanying drawings, of which:
Figure 1 is a front perspective view of an embodiment of a vehicle lamp lens according to the disclosure;
Figure 2 is a rear perspective view of the embodiment;
Figure 3 is a side sectional schematic view of the embodiment, and illustrates light paths;
Figure 4 is a top sectional schematic view of the embodiment, and illustrates light paths; and
Figure 5 is a front schematic view of the embodiment, illustrating a light pattern of the embodiment.

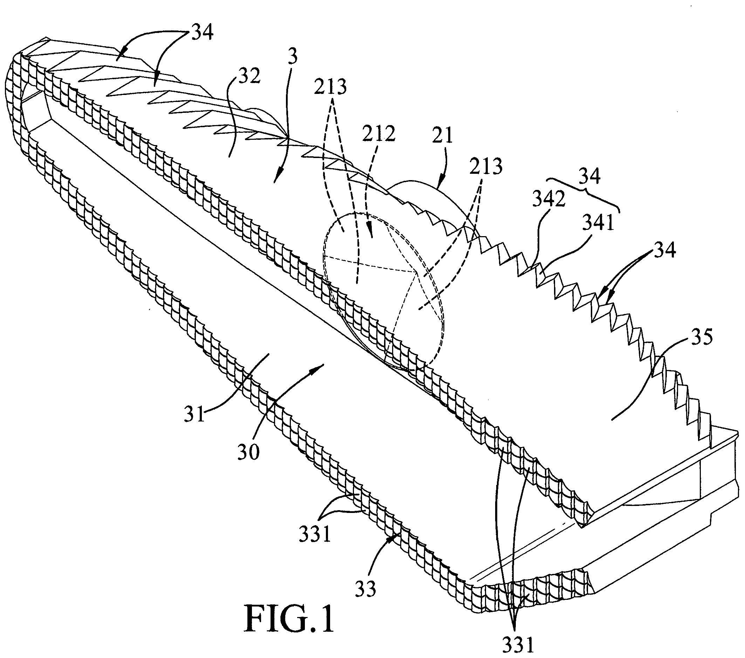

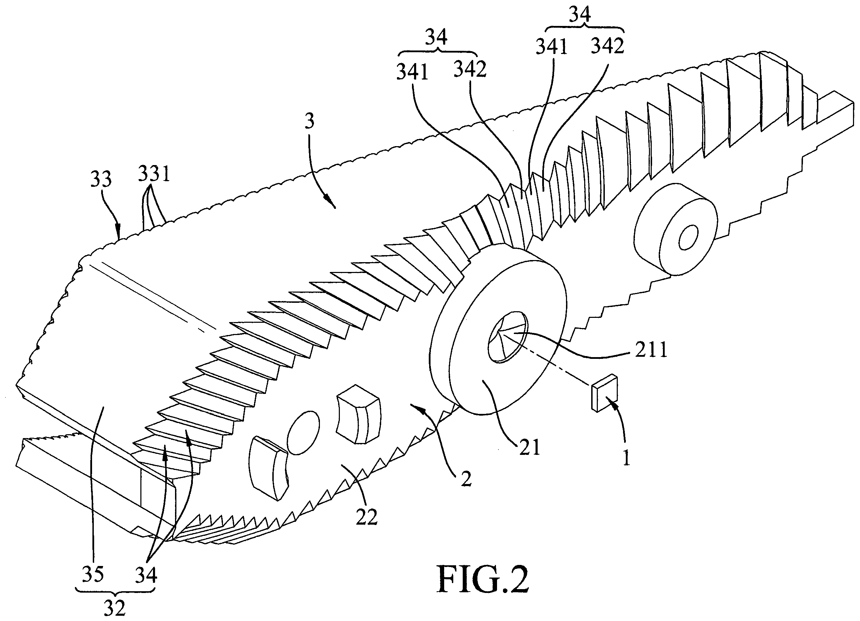

Referring to Figures 1 to 3, the embodiment of a vehicle lamp lens according to the disclosure is adapted to transmit light that is emitted from a light emitting member 1. The light emitting member 1 may be a light-emitting diode (LED). The vehicle lamp lens and the light emitting member 1 cooperately form a vehicle lamp, and may be configured as a head lamp, a daytime running light (DRL), a front turn signal, a rear turn signal and a brake light. The vehicle lamp lens has a base wall 2 and a light output wall 3.

The base wall 2 has a light input portion 21, and an extending portion 22 connected to the light input portion 21. The light input portion 21 has a light input surface 211 adapted to face the light emitting member 1, and centered at an optical axis (L) which is parallel to a front-rear direction, and a base surface 212 centered at the optical axis (L), disposed in front of the light input surface 211. The base surface 212 has a plurality of parabolic base sections 213 disposed for reflecting the light which is propagated from the light input surface 211. It should be noted that, since light beams reflected by a parabolic surface may be parallel to each other, and are further transmitted in a certain direction, in other embodiments, the base sections 213 may cooperate with other types of optical structure to acquire the better light emitting efficiency.

The light output wall 3 extends forwardly from a front end of the base wall 2, and cooperates with the base wall 2 to define a lens space 30.
The light output wall 3 is polygonal-shaped, and has an inner surface 31, an outer surface 32 disposed opposite to the inner surface 31, and a light output surface 33 connected between front ends of the inner and outer surfaces 31, 32. The outer surface 32 is formed with a plurality of microstructures 34 disposed proximate to the base wall 2. The microstructures 34 are juxtaposed along a periphery of a rear end of the outer surface 32, and are disposed for reflecting the light, which is reflected from the base surface 212, toward the light output surface 33. Each of the microstructures 34 has a parabolic first surface portion 341, and a second surface portion 342 connected to the first surface portion 341. The first surface portions 341 cooperately form a multiple parabolic surface structure. The first surface portion 341 of each of the microstructures 34 is connected to the second surface portion 342 of an adjacent one of the microstructures 34. The outer surface 32 has a smooth surface portion 35 disposed in front of the microstructures 34. Where the outer surface 32 is not formed with the microstructures 34 is the smooth surface portion 35. The light output surface 33 is formed with a plurality of diffusing structures 331 protruding forwardly, and disposed for uniforming light passing therethrough. It should be noted that, in other embodiments, the diffusing structures 331 may be omitted.

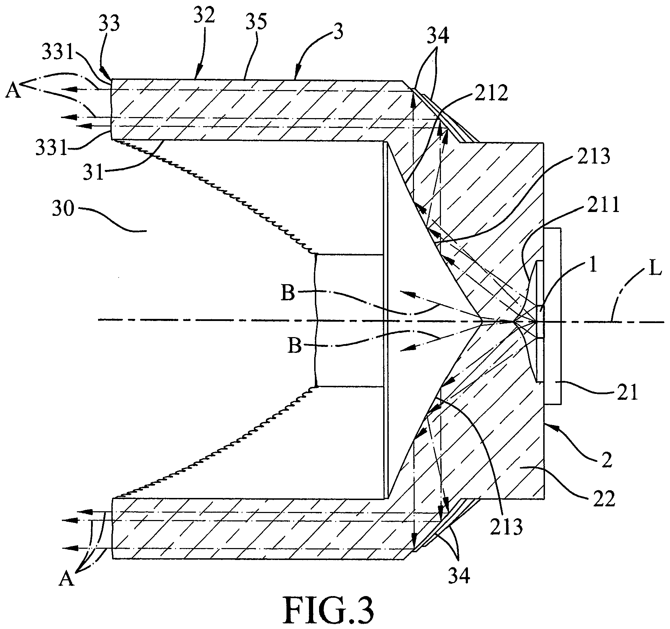

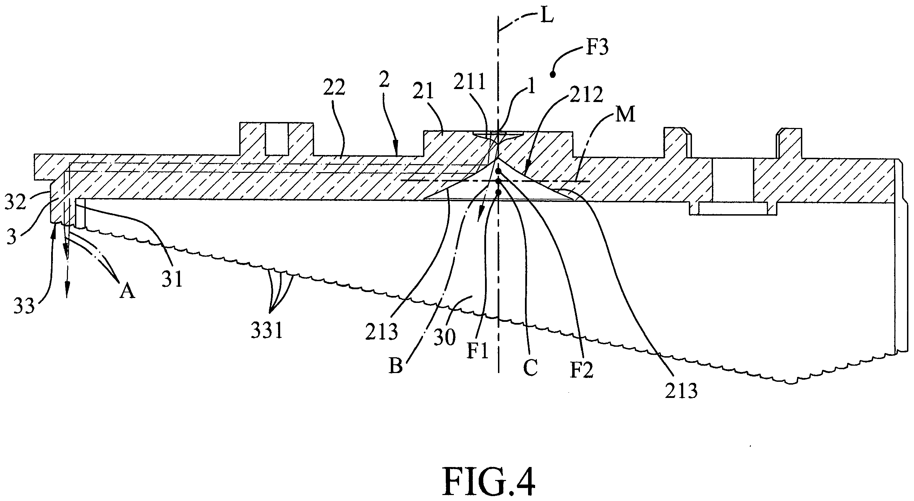

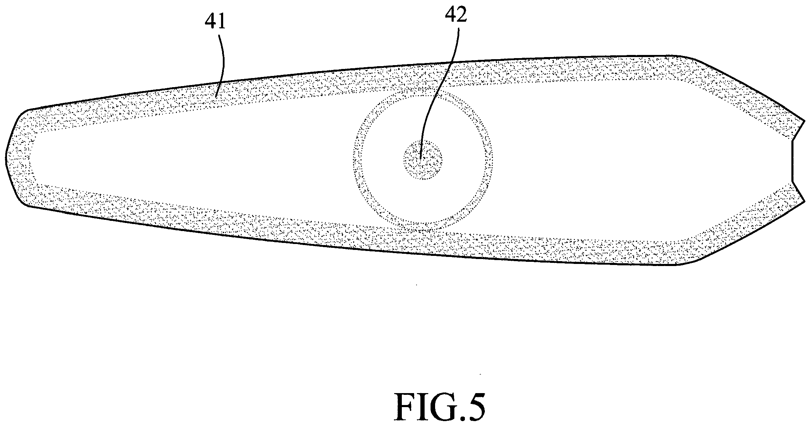

Referring to Figures 1, 3 and 4, the light emitting member 1 is centered at the optical axis (L), and is disposed behind a central portion of the light input surface 211 of the base wall 2. Light beams emitted from the light emitting member 1 firstly enter into the base wall 2 by refraction through the light input surface 211. A majority of light beams (as those transmitted along paths indicated as (A) in Figures 3 and 4) is then totally reflected by the base sections 213 of the base surface 212 toward the microstructures 34 of the light output wall 3. The majority of light beams is subsequently reflected by the microstructures 34 to propagate in the light output wall 3, and is finally transmitted out from the light output surface 33. When the majority of light beams is transmitted out from the diffusing structures 331 of the light output wall 3, the majority of light beams can be projected uniformly on the required area. The base surface 212 further has a central portion disposed for allowing the light which is propagated from the light input surface 211 to refract through the base surface 212 and toward the lens space 30. With such disposition, the rest of light beams entering into the base wall 2 by refraction through the light input surface 211 (as those transmitted along paths indicated as (B) in Figures 3 and 4) is transmitted into the lens space 30, by refraction through the base surface 212, and propagates forwardly. The light beams which propagate along the paths (A) and the paths (B) cooperately form a light pattern (see Figure 5) which satisfies the regulations, and which has a special visual effectiveness.

Referring to Figures 1, 4 and 5, the light pattern has a first area 41 projected by the light beams which propagate along the paths (A), and a second area 42 projected by the light beams which propagate along the path (B), and having a portion that corresponds to the light emitting member 1 in position, and that has brighter visual effectiveness.

Referring to Figures 1 and 4, it should be noted that, the first surface portion 341 of each of the microstructures 34 has a first virtual focus and a first focus length. The first virtual focuses of the first surface portions 341 of the microstructures 34 are located at the same point, and the first focus lengths of the first surface portions 241 are different. With such configurations, a better light transmitting efficiency can be assured and the light utilization rate is increased since the first surface portions 341 of the microstructures 34 can reflect the light beams toward the light output surface 33 with a certain angle of reflection so as to prevent the light beams from being transmitted out from the light output wall 3 by refraction through the outer surface 32 of the light output wall 3.

An imaginary line (M) is defined to be perpendicular to the optical axis (L), and intersects with the optical axis (L) at a central point (C) which is located at a midpoint between vertical projection points of front and rear ends of the base surface 212 along the optical axis (L). Preferably, the first virtual focuses of the first surface portions 341 of the microstructures 34 are located on the optical axis (L), and are located between a front limit point which is 1 millimeter in front of the central point (C)(as indicated as virtual focus (F1) in Figure 4), and a rear limit point which is 1 millimeter behind the central point (C)(as indicated as virtual focus (F2) in Figure 4). With such configuration, the light transmitting efficiency is also improved.

When the first virtual focuses are located at different points, luminous intensities of different projected areas are also different. From the experiment, when the first virtual focuses are located at the central point (C), the maximum luminous intensity is 3920 candela, when the first virtual focuses are located between the front limit point and the rear limit point, the maximum luminous intensity is 3120 candela, and when the first virtual focuses are located at a position where is not between the front limit point and the rear limit point, the maximum luminous intensity is 1360 candela. It can be concluded that, when the first virtual focuses are located at the central point (C), the vehicle lamp lens has a better light transmitting efficiency.

With the disposition of the parabolic-shaped base sections 213 of the base surface 212, the light beams can be accurately reflected toward the microstructures 34. Each of the base sections 213 has a second virtual focus. The second virtual focuses are located at the same point (as indicated as virtual focus (F3) in Figure 4), and are farer away from the light input surface 211 than the light emitting member 1. With such configuration, a better light transmitting efficiency can be acquired.

It should be noted that, the light beams can be accurately reflected by the base sections 213 of the light input surface 21 and by the microstructures 34 since the configurations of the base sections 213 and the microstructures 34 need to cooperate with each other. When the second virtual focuses of the base sections 213 are located at the light emitting member 1, or are located at a point which is closer to the light input surface 211 than the light emitting member 1 (i.e., in front of the light emitting member 1), the light input surface 211 and the base surface 212 of the base wall 2 have to be disposed farer from the light emitting member 1 so as to obtain required optical effectiveness. In such manner, the thickness of the base wall 2 in the front-rear direction has to be increased, and such configuration doses not meet the disposition requirement. In contrast, the thickness of the base wall 2 of the vehicle lamp lens of the disclosure can be relatively thin.

From experiment data, the base wall 2 of the vehicle lamp lens of the disclosure can be controlled to be about 5.5 millimeters. However, when the second virtual focuses of the base sections 213 are located at the light emitting member 1, the thickness of the base wall 2 has to be increased to 7 millimeters. When the second virtual focuses of the base sections 213 are located in front of the light emitting member 1, the thickness of the base wall 2 has to be increased to 9.3 millimeters. In addition, and according to the invention, the second virtual focuses of the base sections 213 are not located on the optical axis (L). If the second virtual focuses of the base sections 213 are located on the optical axis (L), the light input surface 211 will have to be disposed at the same location as the light emitting member 1, and such disposition is not applicable.

In conclusion, with the disposition of the parabolic-shaped base sections 213 and the parabolic-shaped first surface portions 341 of the microstructures 34, the light beams can be efficiently transmitted in the vehicle lamp lens.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various aspects. The invention is defined by the following claims.

## Claims

1. A vehicle lamp lens adapted to transmit light that is emitted from a light emitting member (1), including a base wall (2) that has a light input surface (211) adapted to face the light emitting member (1) and centered at an optical axis (L) which is parallel to a front-rear direction, and a base surface (212) centered at the optical axis (L), disposed in front of said light input surface (211) for reflecting the light which is propagated from said light input surface (211),
and having a plurality of parabolic base sections (213), and
a light output wall (3) that extends forwardly from a front end of said base wall (2), that cooperates with said base wall (2) to define a lens space (30), and that has an inner surface (31), an outer surface (32) disposed opposite to said inner surface (31), and a light output surface (33) connected between front ends of said inner and outer surfaces (31, 32), said outer surface (32) being formed with a plurality of microstructures (34) that are disposed proximate to said base wall (2) for reflecting the light, which is reflected from said base surface (212), toward said light output surface (33), each of said microstructures (34) having a parabolic first surface portion (341) that has a first virtual focus, said first virtual focuses of said first surface portions (341) of said microstructures (34) being located at the same point; wherein each of said base sections (213) has a second virtual focus, said second virtual focuses being located at the same point,
**characterized in that** said second virtual focuses of said base sections (213) are further away from said light input surface (211) than the light emitting member (1), and are not located on the optical axis (L).

2. The vehicle lamp lens as claimed in Claim 1, further **characterized in that**:
an imaginary line (M) is defined to be perpendicular to the optical axis (L), and intersects with the optical axis (L) at a central point (C) which is located at a midpoint between vertical projection points of front and rear ends of said base surface (212) along the optical axis (L); and
said first virtual focuses of said microstructures (34) are located on the optical axis (L), and are located between a front limit point which is 1 millimeter in front of said center point (C), and a rear limit point which is 1 millimeter behind said center point (C).

3. The vehicle lamp lens as claimed in any one of Claims 1 to 2, further **characterized in that** said outer surface (32) of said light output wall (3) has a smooth surface portion (35) disposed in front of said microstructures (34).

4. The vehicle lamp lens as claimed in any one of Claims 1 to 3, further **characterized in that** said base surface (212) of said base wall (2) further has a central portion disposed for allowing the light which is propagated from the light input surface (211) to refract through the base surface (212) and toward said lens space (30).

5. The vehicle lamp lens as claimed in any one of Claims 1 to 4, further **characterized in that** each of said microstructures (34) further has a second surface portion (342) connected to said first surface portion (341), said first surface portion (341) of each of said microstructures (34) being connected to said second surface portion (342) of an adjacent one of said microstructures (34).

6. The vehicle lamp lens as claimed in any one of Claims 1 to 5, further **characterized in that** said light output wall (3) is polygonal-shaped.

7. The vehicle lamp lens as claimed in any one of Claims 1 to 6, further **characterized in that** said light output surface (33) of said light output wall (3) is formed with a plurality of diffusing structures (331) disposed for uniforming light passing therethrough.

## Patentansprüche

1. Fahrzeug-Lampenlinse, welche zum Durchlassen von Licht ausgebildet ist, das von einem Licht aussendenden Körper (1) ausgestrahlt wird, umfassend eine Basiswand (2), die eine Licht Einlassfläche (211), welche derart ausgebildet ist, dass sie dem Licht aussendenden Körper (1) gegenüber liegt und an einer parallel zu einer Vorderseite-Rückseite Richtung verlaufenden optischen Achse (L) zentriert ist, und eine an der optischen Achse (L) zentrierte Basisfläche (212), die vor der Licht Einlassfläche (211) zum Reflektieren des Lichts, das sich von der Licht Einlassfläche (211) ausbreitet, angeordnet ist, und
mehrere parabolische Basisabschnitte (213) hat, und
eine Licht Auslasswand (3), die sich von einem vorderen Ende der Basiswand (2) nach vorne erstreckt, mit der Basiswand (2) zum Festlegen eines Linsenraums (30) zusammenwirkt, und die eine Innenfläche (31), eine der Innenfläche (31) gegenüberliegend angeordnete Außenfläche (32) und eine zwischen vorderen Enden der Innen- und Außenflächen (31, 32) gekoppelte Licht Auslassfläche (33) hat, wobei die Außenfläche (32) mit einer Vielzahl von Mikrostrukturen (34) gebildet ist, die nahe an der Basiswand (2) zum Reflektieren des von der Basisfläche (212) reflektierten Lichts hin zur Licht Auslassfläche (33) angeordnet sind, wobei jede der Mikrostrukturen (34) einen parabolischen ersten Flächenabschnitt (341) hat, der einen ersten virtuellen Brennpunkt hat, die ersten virtuellen Brennpunkte der ersten Flächenabschnitte (341) der Mikrostrukturen (34) in demselben Punkt angeordnet sind; wobei jeder der Basisabschnitte (213) einen zweiten virtuellen Brennpunkt hat, die zweiten virtuellen Brennpunkte in demselben Punkt angeordnet sind,
**dadurch gekennzeichnet, dass** die zweiten virtuellen Brennpunkte der Basisabschnitte (213) sich von der Licht Einlassfläche (211) weiter weg als der Licht aussendende Körper (1) befinden und nicht auf der optischen Achse (L) angeordnet sind.

2. Fahrzeug-Lampenlinse nach Anspruch 1, ferner **dadurch gekennzeichnet**:
eine imaginäre Linie (M) senkrecht zur optischen Achse (L) definiert ist und sich mit der optischen Achse (L) in einem zentralen Punkt (C) schneidet, der in der Mitte zwischen vertikalen Projektionspunkten der vorderen und hinteren Enden der Basisfläche (212) entlang der optischen Achse (L) angeordnet ist; und
die ersten virtuellen Brennpunkte der Mikrostrukturen (34) auf der optischen Achse (L) und zwischen einem vorderen Begrenzungspunkt, welcher 1 mm vor dem zentralen Punkt (C) liegt, und einem hinteren Begrenzungspunkt angeordnet sind, der 1 mm hinter dem zentralen Punkt (C) liegt.

3. Fahrzeug-Lampenlinse nach einem der Ansprüche 1 bis 2, ferner **dadurch gekennzeichnet, dass** die Außenfläche (32) der Licht Auslasswand (3) einen glatten Flächenabschnitt (35) hat, der vor den Mikrostrukturen (34) angeordnet ist.

4. Fahrzeug-Lampenlinse nach einem der Ansprüche 1 bis 3, ferner **dadurch gekennzeichnet, dass** die Basisfläche (212) der Basiswand (2) ferner einen zentralen Abschnitt hat, der es ermöglicht, dass das von der Licht Einlassfläche (211) verbreitete Licht durch die Basisfläche (212) und hin zu dem Linsenraum (30) gebrochen wird.

5. Fahrzeug-Lampenlinse nach einem der Ansprüche 1 bis 4, ferner **dadurch gekennzeichnet, dass** jede der Mikrostrukturen (34) außerdem einen mit dem ersten Flächenabschnitt (341) verbundenen zweiten Flächenabschnitt (342) hat, wobei der erste Flächenabschnitt (341) jeder der Mikrostrukturen (34) mit dem zweiten Flächenabschnitt (342) einer angrenzenden Mikrostruktur (34) verbunden ist.

6. Fahrzeug-Lampenlinse nach einem der Ansprüche 1 bis 5, ferner **dadurch gekennzeichnet, dass** die Licht Auslasswand (3) eine polygonale Gestalt hat.

7. Fahrzeug-Lampenlinse nach einem der Ansprüche 1 bis 6, ferner **dadurch gekennzeichnet, dass** die Licht Auslassfläche (33) der Licht Auslasswand (3) mit einer Vielzahl von diffusen Strukturen (331) zum Vergleichmäßigen des hindurch tretenden Lichts gebildet ist.

## Revendications

1. Lentille de lampe de véhicule adaptée pour transmettre de la lumière qui est émise depuis un élément d'émission de lumière (1), incluant une paroi de base (2) qui a une surface d'entrée de lumière (211) adaptée pour faire face à l'élément d'émission de lumière (1) et centrée au niveau d'un axe optique (L) qui est parallèle à une direction avant/arrière, et une surface de base (212) centrée au niveau de l'axe optique (L), disposée devant ladite surface d'entrée de lumière (211) pour réfléchir la lumière qui est propagée depuis ladite surface d'entrée de lumière (211), et ayant une pluralité de sections de base paraboliques (213), et
une paroi de sortie de lumière (3) qui s'étend vers l'avant depuis une extrémité avant de ladite paroi de base (2), qui coopère avec ladite paroi de base (2) pour définir un espace de lentille (30), et qui a une surface intérieure (31), une surface extérieure (32) disposée à l'opposé de ladite surface intérieure (31), et une surface de sortie de lumière (33) connectée entre des extrémités avant desdites surfaces intérieure et extérieure (31, 32), ladite surface extérieure (32) étant formée avec une pluralité de microstructures (34) qui sont disposées à proximité de ladite paroi de base (2) pour réfléchir la lumière, qui est réfléchie depuis ladite surface de base (212), en direction de ladite surface de sortie de lumière (33), chacune desdites microstructures (34) ayant une première portion de surface parabolique (341) qui a un premier foyer virtuel, lesdits premiers foyers virtuels desdites premières portions de surface (341) desdites microstructures (34) étant situés au niveau du même point ; dans laquelle chacune desdites sections de base (213) a un second foyer virtuel, lesdits seconds foyers virtuels étant situés au niveau du même point,
**caractérisée en ce que** lesdits seconds foyers virtuels desdites sections de base (213) sont plus éloignés de ladite surface d'entrée de lumière (211) que l'élément d'émission de lumière (1), et ne sont pas situés sur l'axe optique (L).

2. Lentille de lampe de véhicule selon la revendication 1, **caractérisée en outre en ce que** :
une ligne imaginaire (M) est définie pour être perpendiculaire à l'axe optique (L), et recoupe l'axe optique (L) au niveau d'un point central (C) qui est situé à mi-chemin entre des points en projection verticale d'extrémités avant et arrière de ladite surface de base (212) le long de l'axe optique (L) ; et
lesdits premiers foyers virtuels desdites microstructures (34) sont situés sur l'axe optique (L) et sont situés entre un point limite avant qui est à 1 millimètre en avant dudit point central (C), et un point limite arrière qui est à 1 millimètre en arrière dudit point central (C).

3. Lentille de lampe de véhicule selon l'une quelconque des revendications 1 à 2, **caractérisée en ce que** ladite surface extérieure (32) de ladite paroi de sortie de lumière (3) a une portion de surface lisse disposée en avant desdites microstructures (34).

4. Lentille de lampe de véhicule selon l'une quelconque des revendications 1 à 3, **caractérisée en outre en ce que** ladite surface de base (212) de ladite paroi de base (2) a en outre une portion centrale disposée pour permettre à la lumière qui est propagée depuis la surface d'entrée de lumière (211) de se réfracter à travers la surface de base (212) et en direction dudit espace de lentille (30).

5. Lentille de lampe de véhicule selon l'une quelconque des revendications 1 à 4, **caractérisée en outre en ce que** chacune desdites microstructures (34) a en outre une seconde portion de surface (342) connectée à ladite première portion de surface (341), ladite première portion de surface (341) de chacune desdites microstructures (34) étant connectée à ladite seconde portion de surface (342) d'une microstructure adjacente parmi lesdites microstructures (34).

6. Lentille de lampe de véhicule selon l'une quelconque des revendications 1 à 5, **caractérisée en ce que** ladite paroi de sortie de lumière (3) est de forme polygonale.

7. Lentille de lampe de véhicule selon l'une quelconque des revendications 1 à 6, **caractérisée en outre en ce que** ladite surface de sortie de lumière (33) de ladite paroi de sortie de lumière (3) est formée avec une pluralité de structures de diffusion (331) disposées pour uniformiser la lumière passant à travers celles-ci.
